# EUROPEAN PATENT APPLICATION

(11) **EP 4 068 319 A1**
(43) Date of publication of application: **05.10.2022**
(21) Application number: 20894453.8
(22) Date of filing: 06.11.2020
(51) Int. Cl.: H01G 11/12, H01M 50/20, H01G 2/02

(54) **POWER STORAGE MODULE**

(30) Priority: 29.11.2019 JP 2019216226
(71) Applicant: Panasonic Intellectual Property Management Co., Ltd., Osaka-shi, Osaka 540-6207 (JP)
(72) Inventor: TAJIMA, Mitsutoshi, Osaka-shi, Osaka 540-6207 (JP)
(74) Representative: Novagraaf International SA
(86) International application number: PCT/JP2020/041440
(87) International publication number: WO 2021/106516

(57) **Abstract**

A power storage module includes: a plurality of power storage devices; a pair of end plates disposed at both ends of the plurality of power storage devices, the end plate including at least a first member and a second member separated from each other; and a binding member including a body part and coupling arms that extend from the body part and are coupled to the pair of end plates, the binding member binding the plurality of power storage devices. The first member includes fixing parts to which the coupling arms are fixed. The second member includes a pressure receiving part that is interposed between the first member and the power storage device and is in direct or indirect contact with the power storage device, and pressing parts that are in direct or indirect contact with base parts of the coupling arms.

## Description

### TECHNICAL FIELD

The present disclosure relates to a power storage module.

### BACKGROUND ART

As a power source required to have a high output voltage for a vehicle, for example, there has been known a power storage module in which a plurality of power storage devices (e.g., batteries) are connected in series. In general, a power storage module includes: a plurality of power storage devices; a pair of end plates arranged at both ends in an array direction of the power storage devices; and a binding member (bind bar) that bridges over the pair of end plates to bind the plurality of power storage devices in the array direction (see, for example, PTL 1).

### Citation List

### Patent Literature

PTL 1: Unexamined Japanese Patent Publication No. 2012-181972

### SUMMARY OF THE INVENTION

### Technical problem

In general, the power storage device expands due to various factors. In the conventional power storage module, this expansion is suppressed by end plates and binding members. Meanwhile, in recent years, the capacity of the power storage device has been increasing, creating a tendency that the amount of expansion of the power storage device increases. Therefore, there is a possibility that a load applied to binding member increases to deform binding member.

The present disclosure has been conceived in view of such circumstances, and one of objects of the present disclosure is to provide a technique for suppressing deformation of a binding member provided in a power storage module.

### Solutions to Problem

An aspect of the present disclosure is a power storage module. The power storage module includes: a plurality of power storage devices arranged in a first direction; a pair of end plates disposed at both ends of the plurality of power storage devices in the first direction, the end plate including at least a first member and a second member, separated from each other; and a binding member including a body part extending in the first direction and coupling arms that extend from the body part in a second direction intersecting the first direction, and are coupled to the pair of end plates, the binding member binding the plurality of power storage devices. The first member includes fixing parts to which the coupling arms are fixed on both sides in the second direction, and the second member includes: a pressure receiving part that is interposed between the first member and the power storage device in the first direction and is in direct or indirect contact with the power storage device; and pressing parts that are in direct or indirect contact with base parts of the coupling arms, the base part being located closer to the body part than the fixing part.

Another aspect of the present disclosure is a power storage module. The power storage module includes: a plurality of power storage devices arranged in a first direction; a pair of end plates disposed at both ends of the plurality of power storage devices in the first direction, the end plate including a hollow part, a first part, and a second part; and a binding member including a body part extending in the first direction and coupling arms that extend from the body part in a second direction intersecting the first direction, and are coupled to the pair of end plates, the binding member binding the plurality of power storage devices. The first part is located on a side farther from the plurality of power storage devices than the hollow part, and has fixing parts to which the coupling arms are fixed on both sides in the second direction. The second part includes: a pressure receiving part that is located closer to the plurality of power storage devices than the hollow part and is in direct or indirect contact with the power storage devices; and pressing parts that connect the pressure receiving part and the first part and are in direct or indirect contact with base parts of the coupling arms, the base part being located closer to the body part than the fixing part.

Any combinations of the above configuration elements, and conversions of the expressions of the present disclosure among methods, devices, systems, and the like are also effective as aspects of the present disclosure.

### Advantageous effect of invention

According to the present disclosure, the deformation of binding member provided in the power storage module can be suppressed.

### BRIEF DESCRIPTION OF THE DRAWINGS

Fig. 1 is a perspective view of a power storage module according to a first exemplary embodiment.
Fig. 2 is an exploded perspective view of the power storage module.
Figs. 3(A) and 3(B) are sectional views schematically illustrating how a power storage device expands.
Fig. 4 is an enlarged sectional view illustrating an end region of the power storage module according to the first exemplary embodiment.
Fig. 5 is an enlarged sectional view illustrating an end region of a power storage module according to a second exemplary embodiment.
Fig. 6(A) is an exploded perspective view of an end plate according to a first modified example. Fig. 6(B) is a sectional view of the end plate according to the first modified example.
Fig. 7(A) is an enlarged schematic sectional view illustrating a part of the end plate according to the second modified example. Fig. 7(B) is an enlarged schematic sectional view illustrating a part of an end plate according to a third modified example. Fig. 7(C) is an enlarged schematic sectional view illustrating a part of an end plate according to a fourth modified example.

### DESCRIPTION OF EMBODIMENT

Hereinafter, the present disclosure will be described on the basis of preferred exemplary embodiments with reference to the drawings. The exemplary embodiments are not intended to limit the present disclosure but are illustrative, and all features described in the exemplary embodiments and combinations of the features are not necessarily essential to the present disclosure. The identical or equivalent configuration elements, members, and processing illustrated in the drawings are denoted by the same reference numerals, and repetitious description will be omitted when appropriate. The scale and the shape of each part illustrated in each drawing are set for the sake of convenience in order to facilitate the understanding of the description and should not be interpreted in a limited manner unless otherwise specified. In cases where terms such as "first" and "second" are used in the present description or claims, these terms do not represent any order or importance but are intended to distinguish one configuration from another configuration, unless otherwise specified. In each drawing, some members, which are not important for describing the exemplary embodiment, are omitted.

### (First exemplary embodiment)

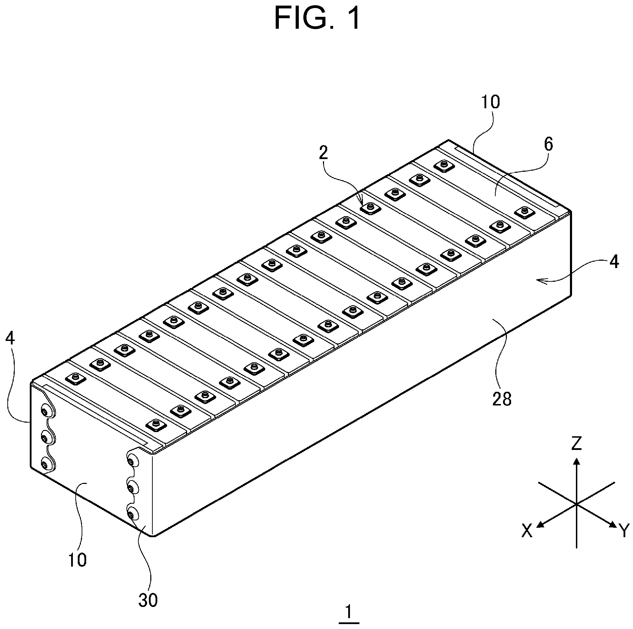

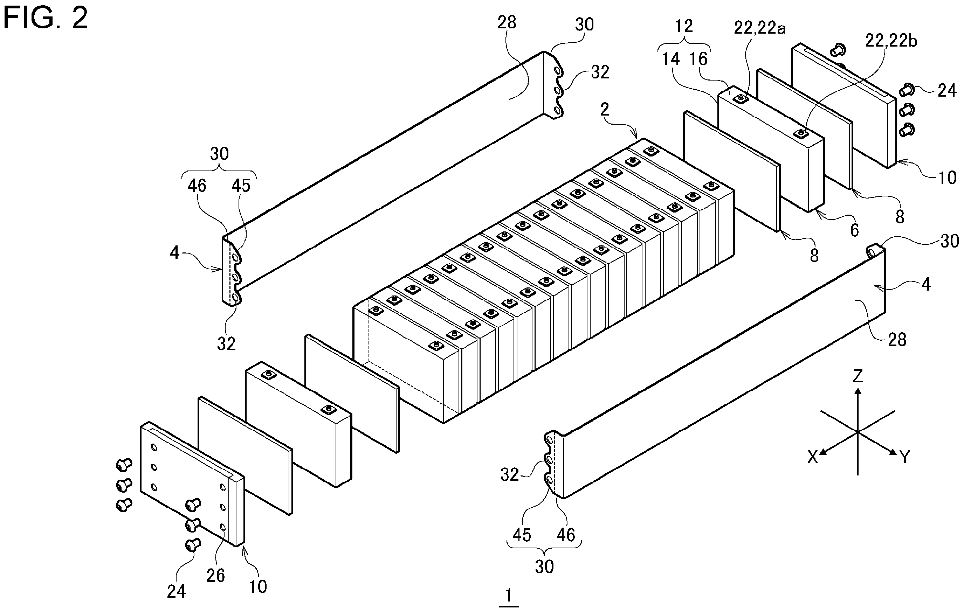

Fig. 1 is a perspective view of a power storage module according to a first exemplary embodiment. Fig. 2 is an exploded perspective view of the power storage module. Power storage module 1 includes battery stack 2, and a pair of binding members 4. Battery stack 2 includes a plurality of power storage devices 6, a plurality of separators 8, and a pair of end plates 10.

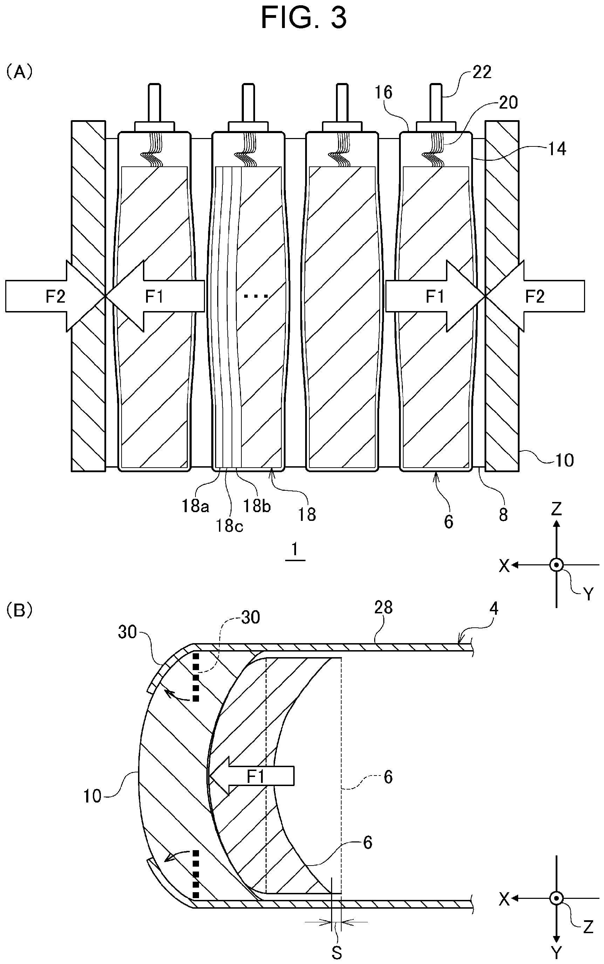

Each power storage device 6 is, for example, a rechargeable secondary battery such as a lithium ion battery, a nickel-hydrogen battery, or a nickel-cadmium battery, or a capacitor such as an electric double layer capacitor. Power storage device 6 of the present exemplary embodiment is a so-called prismatic battery, and has housing 12 having a flat rectangular-parallelepiped shape. Housing 12 includes exterior can 14 and sealing plate 16. Exterior can 14 has a substantially rectangular opening on its one surface, and electrode body 18 (see Fig. 3(A)), an electrolyte, and the like are accommodated in exterior can 14 through this opening.

As illustrated in Fig. 3(A), electrode body 18 has a structure in which a plurality of positive electrodes 18a, a plurality of negative electrodes 18b, and a plurality of porous separators 18c, which are formed like sheets, respectively, are stacked. Positive electrodes 18a and negative electrodes 18b are alternately arranged in first direction X, and porous separator 18c is disposed between positive electrode 18a and negative electrode 18b. Each of positive electrode 18a and negative electrode 18b has lead 20 extending from an end of a stacked body toward sealing plate 16. Lead 20 is connected to output terminal 22 directly or with a current collector interposed therebetween. Electrode body 18 may be a wound body having a structure in which a strip-shaped positive electrode, a strip-shaped negative electrode, and a porous separator are wound together.

Exterior can 14 may be covered with an insulating film (not illustrated) such as a shrink tube. When the surface of exterior can 14 is covered with the insulating film, it is possible to suppress a short circuit between adjacent power storage devices 6, and a short circuit between power storage device 6 and each of end plates 10, and binding members 4. The opening of exterior can 14 is provided with sealing plate 16 that seals exterior can 14 by closing the opening. Exterior can 14 and sealing plate 16 are conductors, and are made of metal such as aluminum, iron, or stainless steel, for example. Exterior can 14 and sealing plate 16 are joined together by, for example, laser welding, friction stir bonding, brazing, and the like. Alternatively, exterior can 14 and sealing plate 16 are made of a resin having an insulating property.

Sealing plate 16 is provided with output terminal 22 located near one end in the longitudinal direction to be electrically connected to positive electrode 18a of electrode body 18, and output terminal 22 located near the other end in the longitudinal direction to be electrically connected to negative electrode 18b of electrode body 18. Hereinafter, output terminal 22 connected to the positive electrode will be referred to as positive-electrode terminal 22a, and output terminal 22 connected to the negative electrode will be referred to as negative-electrode terminal 22b. When it is unnecessary to distinguish the polarities of the pair of output terminals 22 from each other, positive-electrode terminal 22a and negative-electrode terminal 22b are collectively referred to as output terminals 22.

Exterior can 14 has a bottom surface opposing sealing plate 16, and four side surfaces connecting the opening to the bottom surface. Two out of the four side surface are a pair of long side surfaces, which are connected to two opposing long sides of the opening. Each of the long side surfaces is a surface having the largest area among the surfaces of exterior can 14, that is, a main surface. The remaining two side surfaces other than the two long side surfaces are a pair of short side surfaces connected to short sides of the opening of exterior can 14. In the description of present exemplary embodiment, the bottom surface, the long side surfaces, and the short side surfaces of exterior can 14 are defined as a bottom surface, long side surfaces, and short side surfaces of housing 12 or power storage device 6 for the sake of convenience. Sealing plate 16 is defined as a top surface of housing 12 or power storage device 6.

In power storage module 1, a surface of power storage device 6 on a top surface side is defined as a top surface of power storage module 1, a surface of power storage device 6 on a bottom surface side is defined as a bottom surface of power storage module 1, and a surface of power storage device 6 on a short side surface side is defined as a side surface of power storage module 1. The top surface side of power storage module 1 is defined as an upper side in a vertical direction, and the bottom surface side of power storage module 1 is defined as a lower side in the vertical direction. These directions and positions are defined for the sake of convenience. Therefore, for example, a part defined as the top surface in the present disclosure does not mean being always located above a part defined as the bottom surface. Sealing plate 16 is thus not necessarily located above the bottom surface of exterior can 14. Hereinafter, a direction in which the plurality of power storage devices 6 are arranged (stacked) is referred to as first direction X, a direction in which two output terminals 22 are arranged is referred to as second direction Y, and a direction in which the top surface and the bottom surface of power storage device 6 are arranged is referred to as third direction Z. First direction X, second direction Y, and third direction Z are directions orthogonal to each other.

Sealing plate 16 is provided with a safety valve (not illustrated) between the pair of output terminals 22. The safety valve is configured to be capable of opening and releasing an internal gas of housing 12 when the internal pressure of housing 12 rises to a predetermined value or more. Safety valve includes, for example, a thin part, provided at a part of sealing plate 16 to have a thickness smaller than a thickness of the other part, and a linear groove formed on a surface of the thin part. In this configuration, when the internal pressure of housing 12 rises, the thin part is torn starting from the groove so that the safety valve is opened.

The plurality of power storage devices 6 are arranged at predetermined intervals in first direction X such that the long side surfaces of adjacent power storage devices 6 oppose each other. Output terminals 22 of each power storage device 6 are disposed so as to face the same direction. In the present exemplary embodiment, output terminals 22 of each power storage device 6 are disposed so as to face upward in the vertical direction for the sake of convenience. Alternatively, output terminals 22 of each power storage device 6 may be arranged so as to face different directions.

Two adjacent power storage devices 6 are arranged in such a manner that positive-electrode terminal 22a of one power storage device 6 is located next to negative-electrode terminal 22b of the other power storage device 6. Positive-electrode terminal 22a and negative-electrode terminal 22b are connected in series via a bus bar (not illustrated). Alternatively, output terminals 22 of a plurality of power storage devices 6 adjacent to each other, output terminals 22 having the same polarity, may be connected in parallel by bus bars to form power storage device blocks, and these power storage device blocks may be connected in series.

Separator 8, which is referred to also as an insulating spacer, has a plate shape and is disposed between opposing long side surfaces of two adjacent power storage devices 6. Accordingly, these two power storage devices 6 are electrically insulated from each other. Separator 8 is made of, for example, a resin having an insulating property. Examples of the resin used for separator 8 include a thermoplastic resin such as polypropylene (PP), polybutylene terephthalate (PBT), polycarbonate (PC), and a Noryl (registered trademark) resin (modified-PPE). The plurality of power storage devices 6 and the plurality of separators 8 are stacked alternately. Separator 8 is also arranged between power storage device 6 and end plate 10. This insulates power storage device 6 and end plate 10 from each other.

The pair of end plates 10 is disposed at both ends of the plurality of power storage devices 6 in first direction X. The plurality of power storage devices 6 and the plurality of separators 8 arranged side by side are held between the pair of end plates 10 in first direction X. End plate 10 is made of, for example, a metal sheet or a resin sheet. End plate 10 has screw holes 26 into which screws 24 as fixing members are screwed. A structure of end plate 10 will be described in detail later.

The pair of binding members 4 is also referred to as bind bars, and is long members of which longitudinal direction is first direction X. The pair of binding members 4 is disposed so as to face each other in second direction Y. Battery stack 2 is interposed between the pair of binding members 4. Alternatively, the pair of binding members 4 may be coupled by a coupling part (not illustrated) that extends while bypassing battery stack 2 and connects two binding members 4. Each binding member 4 has body part 28 and a pair of coupling arms 30.

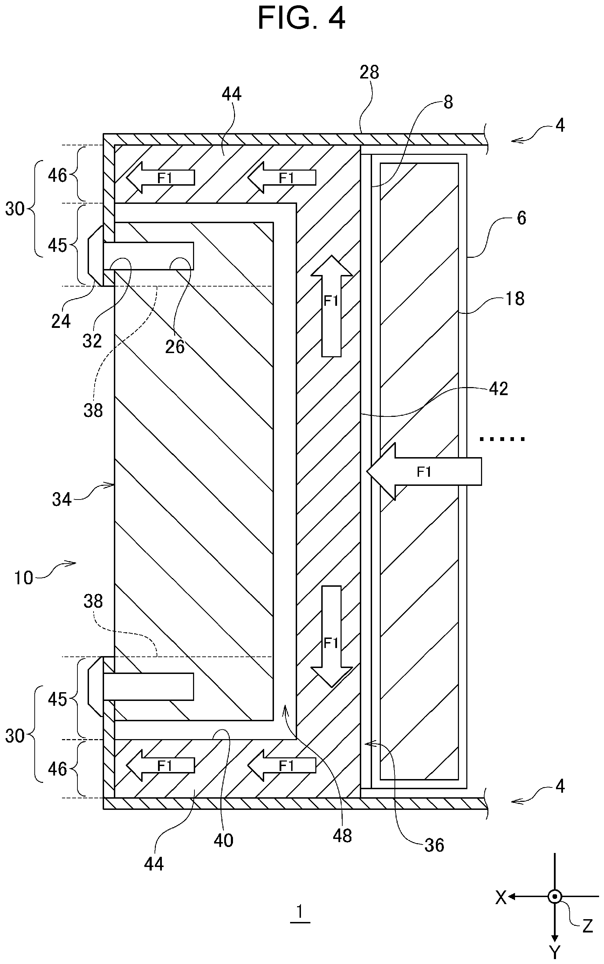

Body part 28 is a rectangular plate-shaped body extending in first direction X. Body part 28 extends in parallel to the short side surface of each power storage device 6. The pair of coupling arms 30 is plate-shaped bodies extending in second direction Y, respectively, from both ends of body part 28 in first direction X. The pair of coupling arms 30 opposes each other in first direction X. Each coupling arm 30 has through-holes 32 through which screws 24 are inserted. coupling arm 30 includes a distal part 45 in which the through-holes 32 are disposed and which is fixed to fixing parts 38 (see Fig. 4) of first member 34, and base part 46 located closer to body part 28 than distal part 45.

As the pair of coupling arms 30 is coupled to the pair of end plates 10, binding members 4 are fixed to battery stack 2. Body part 28 and the pair of coupling arms 30 can be formed by, for example, bending both ends of a metal sheet. In this case, a part from this bending position to the tip corresponds to coupling arm 30, and the remaining part corresponds to body part 28. Alternatively, end plate 10 may be made of a resin as long as predetermined or higher rigidity can be obtained.

Power storage module 1 is assembled, for example, as follows. That is, the plurality of power storage devices 6 and the plurality of separators 8 are arranged alternately and are sandwiched between the pair of end plates 10 in first direction X, thereby forming battery stack 2. Battery stack 2 is sandwiched in second direction Y between the pair of binding members 4. Each binding member 4 is aligned such that through-holes 32 overlap the screw holes 26 of end plate 10. In this state, screws 24 are inserted through through-holes 32 and screwed into screw holes 26.

The pair of binding members 4 is engaged with the pair of end plates 10 in this manner, thereby binding the plurality of power storage devices 6. Each power storage device 6 is positioned in first direction X by being fastened in first direction X by binding members 4. Alternatively, coupling arm 30 and end plate 10 may be fixed by welding or the like. A surface of binding member 4 opposing battery stack 2 may be covered with an insulating sheet (not illustrated).

As an example, after this positioning is completed, the bus bars are attached to output terminals 22 of power storage devices 6 so that output terminals 22 of the plurality of power storage devices 6 are electrically connected to each other. For example, the bus bars are fixed to output terminals 22 by welding. Then, the top surface of battery stack 2 is covered with a cover member (not illustrated). The cover member prevents dewdrops, dust, and the like from coming in contact with output terminals 22, the bus bars, the safety valves, and the like. The cover member is made of a resin having an insulating property, for example, and can be fixed to the top surface of battery stack 2 by a well-known fixing structure (not illustrated) including screws and a well-known locking mechanism.

Figs. 3(A) and 3(B) are sectional views schematically illustrating how power storage device 6 expands. Power storage devices 6 are illustrated in Fig. 3(A) by a reduced number. In Figs. 3(A) and 3(B), a structure of each part is simplified.

As illustrated in Fig. 3(A), electrode body 18 is accommodated inside each power storage device 6. In power storage device 6, exterior can 14 repeats expansion and contraction with charging and discharging or the like. The expansion of exterior can 14 is mainly caused due to expansion of electrode body 18. Therefore, the central part of exterior can 14 expands more than the peripheral part. When exterior can 14 of each power storage device 6 expands, force F1 toward the outside in first direction X is generated in battery stack 2. On the other hand, reaction force F2 that corresponds to force F1 is applied to battery stack 2 by binding member 4. This suppresses the expansion of power storage device 6.

In a structure where the plurality of power storage devices 6 are bound by binding member 4, a load is applied to binding member 4 when power storage devices 6 expand. When the amount of expansion increases due to an increase in capacity of power storage device 6, the load applied to binding member 4 also increases. When the load applied to binding member 4 becomes excessive, there is a possibility that binding member 4 is deformed. Specifically, as illustrated in Fig. 3(B), coupling arms 30 are fixed to both ends of end plate 10 in second direction Y in the present exemplary embodiment. Therefore, when power storage device 6 expands, end plate 10 is deformed such that its central part swells outward. When such deformation occurs in end plate 10, coupling arms 30 are deformed so as to be opened to the outside of the power storage module 1. In particular, when power storage device 6 in second direction Y has a large dimension in order to increase the capacity, end plate 10 also extends in second direction Y and is easily bent, so that coupling arms 30 are easily opened to the outside.

When coupling arm 30 is opened to the outside, there is a possibility that excessive stress is generated in a connection part between body part 28 and coupling arm 30 to break binding member 4. When the strength of binding member 4 is enhanced in an attempt to prevent the breakage, such an attempt may result in an increase in size and cost of binding member 4 and, eventually, power storage module 1. When coupling arm 30 is opened to the outside, end plate 10 may move in a direction of being separated from power storage device 6. When end plate 10 moves, the binding of power storage device 6 is loosened so that misalignment S in first direction X occurs in power storage device 6. If power storage device 6 is misaligned in first direction X, there is a possibility that power storage device 6 falls off or the electrical connection between adjacent power storage devices 6 becomes unstable.

On the other hand, binding member 4 and end plate 10 have a coupling structure, which will be described hereinafter, in the present exemplary embodiment to suppress deformation of binding member 4. Fig. 4 is an enlarged sectional view illustrating an end region of power storage module 1 according to the first exemplary embodiment. In Fig. 4, an internal structure of power storage device 6 is simplified. Each end plate 10 includes at least first member 34 and second member 36 which are separated from each other. End plate 10 of the present exemplary embodiment includes only first member 34 and second member 36, but may include other members such as a third member and a fourth member.

First member 34 has a flat plate shape extending in second direction Y and third direction Z, and has fixing parts 38 to which coupling arms 30 are fixed on both sides in second direction Y. Fixing part 38 has screw hole 26. Second member 36 has a flat plate shape expanding in second direction Y and third direction Z, and has recess 40 on a main surface facing opposite to power storage device 6. Therefore, second member 36 has a U-shaped (C-shaped) cross-sectional shape along an XY plane that is parallel to first direction X and second direction Y. First member 34 is accommodated in recess 40.

Second member 36 includes pressure receiving part 42 and pressing parts 44. Pressure receiving part 42 is interposed between first member 34 and power storage device 6 in first direction X, is in direct or indirect contact with power storage device 6, and receives force F1 from power storage device 6. Pressing parts 44 are in direct or indirect contact with base parts 46, located closer to body part 28 than fixing part 38, of coupling arms 30. In second member 36 having the U shape, a bottom surface facing power storage device 6 forms pressure receiving part 42, and a pair of side surfaces extending in first direction X from both ends of pressure receiving part 42 in second direction Y form pressing parts 44, respectively. As a case where pressing part 44 is in indirect contact with base part 46, a case where pressing part 44 is in contact with base part 46 with an insulating sheet interposed therebetween when the surface of binding member 4 is covered with the insulating sheet described above, and the like is assumable.

When force F1 is input from power storage device 6 to pressure receiving part 42, second member 36 is independently displaced or deformed with respect to first member 34. As a result, pressing part 44 of second member 36 presses base part 46. Force F1 generated by the expansion of power storage device 6 is guided to base part 46 so that base part 46, closer to the connection part between body part 28 and coupling arm 30 than fixing part 38, receives force F1. Thus, the moment of the force generated in coupling arm 30 is reduced, and deformation of coupling arm 30 can be suppressed. Accordingly, it is possible to reduce stress generated at a connection part between base part 46 and body part 28, and hence, it is possible to suppress the misalignment of power storage device 6.

End plate 10 includes void 48 interposed between first member 34 and pressure receiving part 42. In the present exemplary embodiment, a depth (size in first direction X) of recess 40 is larger than a thickness (size in first direction X) of fixing part 38. First member 34 is fixed to distal part 45, and pressing part 44 abuts on base part 46. As a result, void 48 is provided between first member 34 and pressure receiving part 42. Since void 48 is interposed, pressure receiving part 42 is easily displaced in first direction X when power storage device 6 expands. Therefore, force F1 from power storage device 6 can be partially absorbed by pressure receiving part 42. Therefore, the load applied to binding member 4 can be reduced. Note that void 48 is not necessarily provided. That is, first member 34 and second member 36 may be in contact with each other. Even in this case, first member 34 is just in contact with second member 36, and thus, it is possible to suppress first member 34 from following the displacement or deformation of second member 36.

In addition, it is possible to avoid that the expansion of power storage device 6 is excessively suppressed by binding member 4 and an excessive load is applied to electrode body 18, particularly the porous separator 18c. With such a configuration, it is possible to suppress degradation in performance and shortening of life of power storage device 6. In addition, force F1 can be prevented from being transmitted to first member 34, and the deformation of coupling arm 30 can be further suppressed.

Further, an area (size in second direction Y and third direction Z) of recess 40 is larger than an area (size in second direction Y and third direction Z) of first member 34. As a result, void 48 extends up to a part between first member 34 and pressing part 44. Since void 48 extends up to the part between first member 34 and pressing part 44, second member 36 is more easily displaced. As a result, force F1 can be more easily transmitted to base part 46.

Pressure receiving part 42 overlaps electrode body 18 as viewed in first direction X. Pressure receiving part 42 is disposed between two fixing parts 38 as viewed in first direction X. As a result, force F1 generated by the expansion of power storage device 6 can be more reliably received by pressure receiving part 42 and transmitted to base part 46.

Alternatively, pressure receiving part 42 may be disposed in a region excluding a part between two fixing parts 38 as viewed in first direction X. For example, pressure receiving part 42 may be disposed so as to be in contact with only the vicinity of an outer edge of the housing 12. In this case, second member 36 may be an annular frame body. Alternatively, second member 36 may be divided into a plurality of components and have a structure in which the respective components are arranged in second direction Y in which the pair of binding members 4 is arranged. For example, second member 36 includes a first component including one pressing part 44 and a second component including the other pressing part 44. Each of the first component and the second component has pressure receiving part 42 opposite to pressing part 44 in first direction X. A dimension (thickness) of pressure receiving part 42 in first direction X may be smaller than a dimension of pressing part 44 in second direction Y. In this case, pressure receiving part 42 becomes thin, and thus, is easily deformed. Accordingly, the expansion of power storage device 6 can be easily absorbed by pressure receiving parts 42. As a result, force F1 transmitted from pressure receiving part 42 to pressing part 44 can be weakened so that a force by which pressing part 44 presses base part 46 can be weakened.

As described above, the power storage module 1 according to present exemplary embodiment includes: the plurality of power storage devices 6 arranged in first direction X; the pair of end plates 10 disposed at both ends of the plurality of power storage devices 6 in first direction X, the end plate including at least first member 34 and second member 36 separated from each other; and binding member 4 including body part 28 extending in first direction X and coupling arms 30 that extend from body part 28 in second direction Y intersecting first direction X and are coupled to the pair of end plates 10, the binding member binding the plurality of power storage devices 6.

First member 34 has fixing parts 38 to which coupling arms 30 are fixed on both sides in second direction Y. Second member 36 includes: pressure receiving part 42 that is interposed between first member 34 and power storage device 6 in first direction X and is in direct or indirect contact with power storage device 6; and pressing parts 44 that are in direct or indirect contact with base parts 46, located closer to body part 28 than fixing part 38, of coupling arms 30. Since end plate 10 has such a structure, it is possible to suppress the deformation of binding member 4 when power storage device 6 expands. Further, the breakage of binding member 4 can be suppressed by suppressing the deformation of binding member 4. Further, it is possible to suppress the displacement of power storage device 6.

End plate 10 includes void 48 interposed between first member 34 and pressure receiving part 42. Accordingly, the load applied to binding member 4 can be reduced. further, it is possible to suppress the degradation in performance and the shortening of life of power storage device 6.

Power storage device 6 includes housing 12, and electrode body 18 that includes positive electrode 18a and negative electrode 18b arranged in first direction X and is accommodated in housing 12, and pressure receiving part 42 overlaps electrode body 18 as viewed in first direction X. Pressure receiving part 42 is disposed between two fixing parts 38 as viewed in first direction X. This can further suppress the deformation of binding member 4.

### (Second exemplary embodiment)

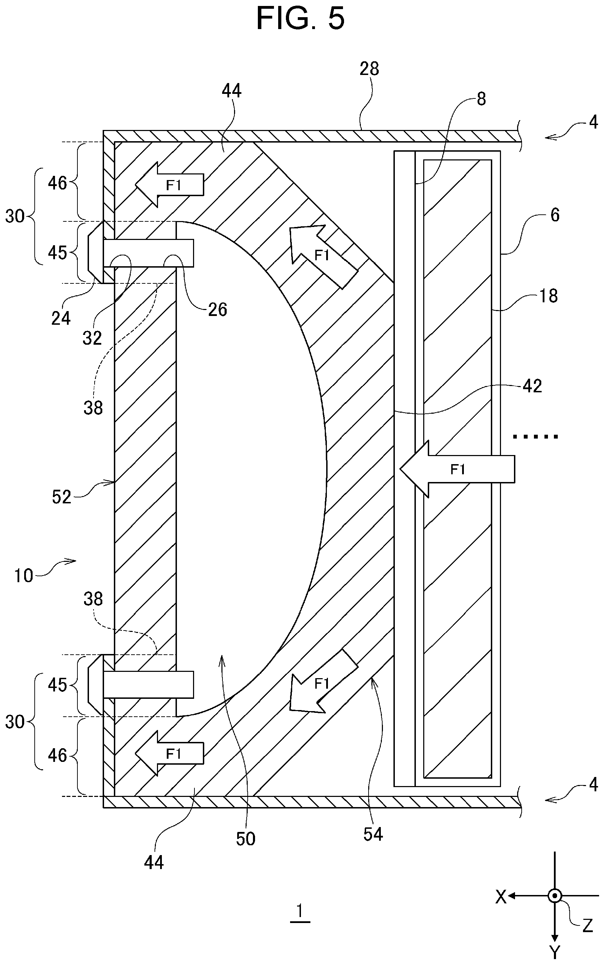

A second exemplary embodiment has a configuration common to the first exemplary embodiment except for a shape of end plate 10. Hereinafter, the second exemplary embodiment will be described with focus placed on configurations different from those of the first exemplary embodiment, and the same configurations will be briefly described or not described. Fig. 5 is an enlarged sectional view illustrating an end region of power storage module 1 according to a second exemplary embodiment. In Fig. 5, an internal structure of power storage device 6 is simplified.

Power storage module 1 includes a plurality of power storage devices 6, a pair of end plates 10, and binding member 4. The plurality of power storage devices 6 are arranged in first direction X. The pair of end plates 10 is disposed at both ends of the plurality of power storage devices 6 in first direction X. Binding member 4 includes a body part 28 and coupling arms 30, and binds the plurality of power storage devices 6. Body part 28 extends in first direction X. Coupling arms 30 extend from body part 28 in second direction Y intersecting first direction X and are coupled to the pair of end plates 10.

Each end plate 10 has hollow part 50, first part 52, and second part 54. End plate 10 of the present exemplary embodiment is a plate having a trapezoidal cross-sectional shape along the XY plane, first part 52 and second part 54 form an outer shell, and hollow part 50 is disposed inside the outer shell. First part 52 and second part 54 are integrated. First part 52 is located farther from the plurality of power storage devices 6 than hollow part 50. First part 52 has fixing parts 38 to which coupling arms 30 are fixed on both sides in second direction Y.

Second part 54 includes a pressure receiving part 42 and pressing parts 44. Pressure receiving part 42 is located closer to the plurality of power storage devices 6 than hollow part 50, is in direct or indirect contact with power storage device 6, and receives force F1 from power storage device 6. Pressing parts 44 connect pressure receiving part 42 and first part 52 and are in direct or indirect contact with base parts 46, located closer to body part 28 than fixing part 38, of coupling arms 30, and press base parts 46 when force F1 is input to pressure receiving part 42. End plate 10 configured in this manner can also suppress deformation of binding member 4 when power storage device 6 expands.

A dimension of hollow part 50 in second direction Y may be larger than a distance between two fixing parts 38 in second direction Y. With this configuration, base part 46 is more likely to preferentially receive the force from pressing part 44 than fixing part 38. In addition, a dimension (thickness) in first direction X of a part sandwiched between the two fixing parts 38 in first part 52 may be smaller than a dimension of each pressing part 44 in second direction Y, in other words, a dimension in second direction Y of each of two parts, arranged with hollow part 50 interposed therebetween, in second part 54. With this configuration, the part sandwiched between the two fixing parts 38 in first part 52 is easily deformed, and thus, the force can be preferentially applied from pressing part 44 to base part 46. Therefore, a force in a direction in which coupling arm 30 is open outward can be further prevented from being transmitted to fixing part 38.

The exemplary embodiments of the present disclosure have been described in detail above. The above-described exemplary embodiments are merely specific examples for implementing the present disclosure. The contents of the exemplary embodiments do not limit the technical scope of the present disclosure, and many design changes such as changes, additions, and deletions of configuration elements can be made without departing from the spirit of the invention defined in the claims. Any new exemplary embodiment resulting from a change or modification according to the designed concept offers effects of an exemplary embodiment and a modification that are combined with the new exemplary embodiment. In the above-described exemplary embodiments, what can be changed or modified according to the designed concept is emphasized by such phrases as "of the present exemplary embodiment" and "in the present exemplary embodiment". However, contents not expressed by such phrases may also be changed or modified according to the designed concept. Further, any combination of configuration elements included in each exemplary embodiment is also effective as an aspect of the present disclosure. Hatching applied to the cross section in the drawing does not limit the material of the object to which the hatching has been applied.

### (First modified example)

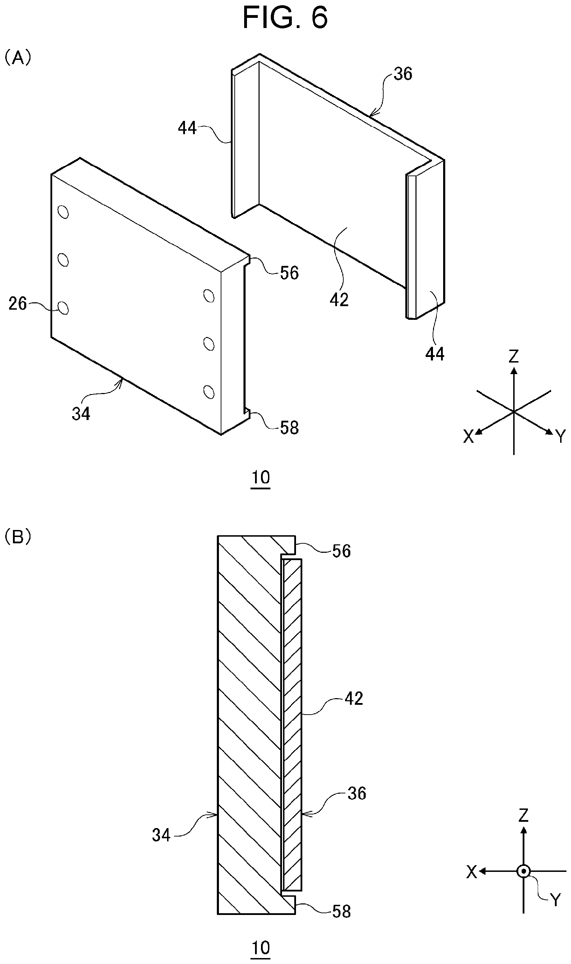

Fig. 6(A) is an exploded perspective view of end plate 10 according to a first modified example. Fig. 6(B) is a sectional view of end plate 10 according to the first modified example. End plate 10 of the present modified example includes first member 34 and second member 36 that are separated from each other, which is similar to end plate 10 of the first exemplary embodiment. First member 34 has a plate shape extending in second direction Y and third direction Z. Second member 36 has a U-shaped cross-sectional shape along the XY plane, and includes pressure receiving part 42 and pressing parts 44.

First member 34 of the present modified example includes upper protrusion 56 and lower protrusion 58 that protrude in first direction X from upper and lower ends of a main surface facing second member 36. Both of upper protrusion 56 and lower protrusion 58 have an elongated shape extending in second direction Y, and oppose each other in third direction Z. Pressure receiving part 42 is sandwiched between upper protrusion 56 and lower protrusion 58 in a state where first member 34 and second member 36 are combined. Accordingly, second member 36 is supported by first member 34. As a result, it is possible to prevent second member 36 from falling off at the time of assembling power storage module 1 or the like. Note that a locking structure between first member 34 and second member 36 is not limited to the combination of upper protrusion 56 and lower protrusion 58. For example, a protrusion may be provided on one of first member 34 and second member 36, and a recess into which the protrusion is fitted may be provided on the other.

### (Second modified example)

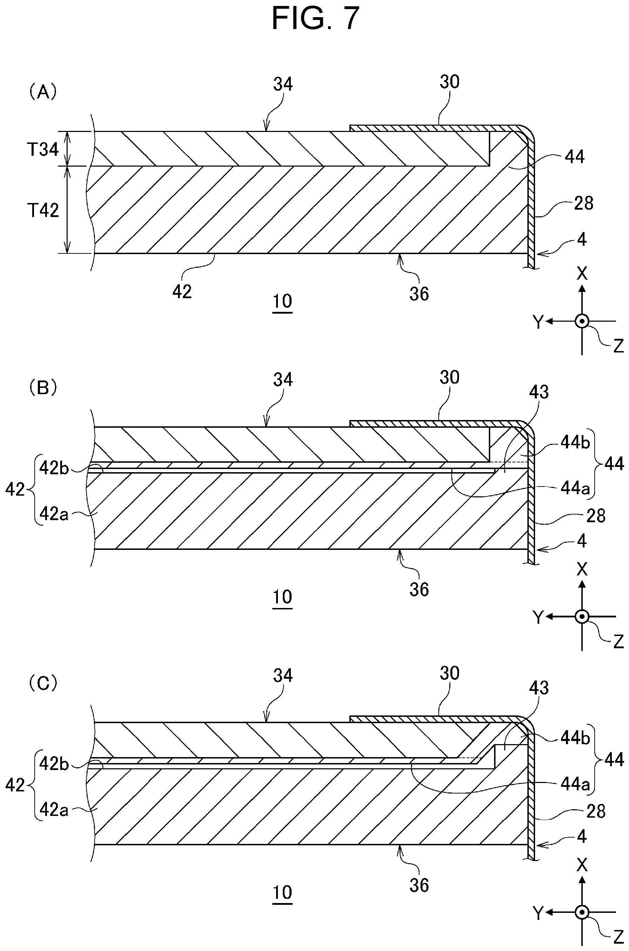

Fig. 7(A) is an enlarged schematic sectional view illustrating a part of end plate 10 according to a second modified example. Fig. 7(A) also illustrates a part of binding member 4. In end plate 10 of the present modified example, thickness T42 of pressure receiving part 42 is larger than thickness T34 of first member 34. Thickness T42 is a dimension of pressure receiving part 42 in first direction X, and thickness T34 is a dimension of first member 34 in first direction X. Thickness T42 is, for example, an average thickness of pressure receiving part 42, and thickness T34 is, for example, an average thickness of first member 34.

Accordingly, pressure receiving part 42 is easily thickened particularly in end plate 10 in which first member 34 is accommodated in second member 36, in other words, both sides of first member 34 in second direction Y are sandwiched by pressing parts 44, so that it is possible to reduce a protruding height of pressing part 44 (a size from an end closer to pressure receiving part 42 to an end closer to coupling arm 30). Therefore, when pressure receiving part 42 receives force F1 from power storage device 6, it is possible to prevent the central part of pressure receiving part 42 in second direction Y from being curved and deformed to protrude from its edge (to be separated from power storage device 6). Since this curving deformation is suppressed, it is possible to suppress pressing part 44 from being opened to the outside in second direction Y. As a result, force F1 input to pressure receiving part 42 can be easily transmitted to coupling arm 30 through pressing part 44. Although not illustrated in Fig. 7(A), end plate 10 may have a void between first member 34 and pressure receiving part 42. In second member 36, the thickness of pressure receiving part 42 may be larger than the protruding height of pressing part 44. Even with such a structure, it is possible to prevent pressing part 44 from being deformed to be open to the outside in second direction Y.

### (Third modified example)

Fig. 7(B) is an enlarged schematic sectional view illustrating a part of end plate 10 according to a third modified example. Fig. 7(B) also illustrates a part of binding member 4. In end plate 10 of the present modified example, pressure receiving part 42 and pressing part 44 are separated from each other. Pressure receiving part 42 includes flat plate part 42a extending parallel to a YZ plane and recess 42b provided on a main surface of flat plate part 42a facing first member 34. Recess 42b is provided in a region including the central part of pressure receiving part 42 in second direction Y. Therefore, edge 43 of flat plate part 42a protrudes toward first member 34 from a bottom surface of recess 42b. Pressing part 44 includes flat plate part 44a that extends parallel to the YZ plane and is arranged side by side with flat plate part 42a in first direction X, and a protrusion 44b that protrudes in first direction X from an edge of flat plate part 44a in second direction Y and is in contact with coupling arm 30. The entire main surface of the flat plate part 44a facing pressure receiving part 42 extends parallel to the YZ plane, and the edge in second direction Y is in contact with edge 43 of pressure receiving part 42.

Since recess 42b is provided in flat plate part 42a, only edge 43 abuts on flat plate part 44a. Therefore, a gap is formed between flat plate part 44a and a region of flat plate part 42a excluding edge 43. Accordingly, even when flat plate part 42a receives force F1 from power storage device 6 and is curved and deformed, it is possible to suppress flat plate part 44a from being pushed by the deformed flat plate part 42a. Accordingly, protrusion 44b can be prevented from being opened to the outside in second direction Y. Thus, force F1 input to pressure receiving part 42 can be easily transmitted to coupling arm 30 through pressing part 44. Although not illustrated in Fig. 7(B), end plate 10 may have a void between first member 34 and flat plate part 44a.

### (Fourth modified example)

Fig. 7(C) is an enlarged schematic sectional view illustrating a part of end plate 10 according to a fourth modified example. Fig. 7(C) also illustrates a part of binding member 4. In the present modified example as well, pressure receiving part 42 and pressing part 44 are separated from each other as in the third modified example. Pressure receiving part 42 includes flat plate part 42a and recess 42b, and pressing part 44 includes flat plate part 44a and protrusion 44b. Flat plate part 44a of the present modified example is disposed inside recess 42b while maintaining a gap with flat plate part 42a. An outer part of protrusion 44b in second direction Y abuts on edge 43. An inner part of protrusion 44b in second direction Y is inclined so as to fall into recess 42b as being separated from edge 43 in second direction Y, and is connected to an edge of flat plate part 44a.

Since protrusion 44b has the inclined part, protrusion 44b can be further prevented from being opened outward as compared with the case where the entire protrusion 44b protrudes parallel to first direction X as in the third modified example. As a result, force F1 input to pressure receiving part 42 can be more easily transmitted to coupling arm 30 through pressing part 44. Although not illustrated in Fig. 7(C), end plate 10 may have a void between first member 34 and flat plate part 44a.

### REFERENCE MARKS IN THE DRAWINGS

- 1: power storage module
- 4: binding member
- 6: power storage device
- 10: end plate
- 28: body part
- 30: coupling arm
- 34: first member
- 36: second member
- 38: fixing part
- 42: pressure receiving part
- 44: pressing part
- 46: base part
- 48: void
- 50: hollow part
- 52: first part
- 54: second part

## Claims

1. A power storage module comprising:
a plurality of power storage devices arranged in a first direction;
a pair of end plates disposed at both ends of the plurality of power storage devices in the first direction, the end plates each including at least a first member and a second member separated from each other;
a binding member including a body part extending in the first direction and coupling arms that extend from the body part in a second direction intersecting the first direction and are coupled to the pair of end plates, the binding member binding the plurality of power storage devices,
wherein the first member includes fixing parts are on both sides in the second direction, each of the fixing parts fixing a corresponding one of the coupling arms, and
the second member includes: a pressure receiving part that is interposed between the first member and a power storage device among the plurality of power storage devices in the first direction and is in direct or indirect contact with the power storage device; and pressing part that is in direct or indirect contact with base part of the corresponding one of the coupling arms, the base part being located closer to the body part than the each of the fixing parts.

2. The power storage module according to Claim 1, wherein
the end plates each includes a void interposed between the first member and the pressure receiving part.

3. The power storage module according to Claim 1 or 2, wherein
the power storage devices each includes a housing and an electrode body that includes ▪BR> 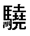 a positive electrode and a negative electrode arranged in the first direction and is accommodated in the housing, and
the pressure receiving part overlaps the electrode body as viewed in the first direction.

4. The power storage module according to any one of Claims 1 to 3, wherein
the pressure receiving part is disposed between a pair of the fixing parts as viewed in the first direction.

5. The power storage module according to any one of Claims 1 to 3, wherein
the pressure receiving part is disposed in a region excluding a part between a pair of the fixing parts as viewed in the first direction.

6. A power storage module comprising:
a plurality of power storage devices arranged in a first direction;
a pair of end plates disposed at both ends of the plurality of power storage devices in the first direction, the end plates each including a hollow part, a first part, and a second part; and
a binding member including a body part extending in the first direction and coupling arms that extend from the body part in a second direction intersecting the first direction and are coupled to the pair of end plates, the binding member binding the plurality of power storage devices,
wherein the first part is located farther from the plurality of power storage devices than the hollow part, and includes fixing parts are on both sides in the second direction, each of the fixing parts fixing a corresponding one of the coupling arms and
the second part includes: a pressure receiving part that is located closer to the plurality of power storage devices than the hollow part and is in direct or indirect contact with the power storage devices among the plurality of power storage devices; and pressing part that connect the pressure receiving part and the first part and is in direct or indirect contact with base part of the corresponding one of the coupling arms, the base part being located closer to the body part than the each of the fixing parts.
